# EUROPÄISCHE PATENTSCHRIFT

(11) **EP 0 632 067 B1**
(45) Veröffentlichungstag und Bekanntmachung des Hinweises auf die Patenterteilung: **10.09.1997**
(21) Anmeldenummer: 94109385.8
(22) Anmeldetag: 17.06.1994
(51) Int. Cl.: C08F 218/08, C08F 210/02

(54) **Verfahren zur Herstellung von gelfreien Ethylen-/Vinylacetat-Copolymerisaten mit einem hohen Gehalt an einpolymerisiertem Vinylacetat und einer hohen Mooney-Viskosität**
Process for préparing gel-free copolymers of ethylene-vinyl acetate with a high content of vinyl acetate and high mooney viscosity
Procédé de préparation de copolymères d'éthylène acétate de vinyle exempt de gels et avec une teneur élevée en acétate de vinyle et ou viscosité mooney élevée

(30) Priorität: 30.06.1993 DE 4321764
(43) Veröffentlichungstag der Anmeldung: 04.01.1995
(73) Patentinhaber: BAYER AG, 51368 Leverkusen (DE)
(72) Erfinder: Steiger, Roland, Dr., D-41539 Dormagen (DE); Asch, Erhard, Dr., D-51065 Köln (DE); Baade, Wolfgang, Dr., D-41539 Dormagen (DE); Obrecht, Werner, Dr., D-47447 Moers (DE)

(56) Entgegenhaltungen:
- EP-A- 0 307 755
- EP-A- 0 341 499
- EP-A- 0 510 478
- DE-A- 3 825 450

## Beschreibung

Die Erfindung betrifft ein Verfahren zur Herstellung von gelfreien Ethylen-/Vinylacetat-Copolymerisaten mit einem hohen Gehalt an einpolymerisiertem Vinylacetat und einer hohen Mooney-Viskosität sowie die Verwendung der gelfreien Ethylen-/Vinylacetat-Copolymerisate zur Herstellung von Vulkanisaten mit verbesserten mechanischen Eigenschaften.

Aus US 4 485 225 (DE 3 228 169) und EP 136 559 sind Verfahren zur Copolymerisation von Ethylen- und Vinylacetat bekannt, die in Gegenwart eines radikalischen Initiators und in Gegenwart eines Lösungsmittels durchgeführt-werden. Die nach den in der US-Patentschrift 4 485 225 hergestellten Ethylen-/Vinylacetat-Copolymerisate bzw. die daraus hergestellten Vulkanisate weisen unbefriedigende mechanische Eigenschaften auf. Darüberhinaus ist die Raum/Zeit-Ausbeute bei dem in der US-Patentschrift 4 485 225 beschriebenen Verfahren unbefriedigend. Eine unbefriedigende Raum/Zeit-Ausbeute wird ebenfalls durch das in der Europäischen Patentanmeldung 136 559 beschriebene Verfahren zur Herstellung von Ethylen-Vinylacetat-Copolymerisaten erreicht.

Aus der Europäischen Patentanmeldung 374 660 ist ein Verfahren zur Herstellung von Ethylen-/Vinylacetat-Copolymerisaten mit erhöhter Festigkeit bekannt. Die erhöhte Festigkeit der Copolymerisate wird erreicht durch Zusatz von geringen Mengen an Acryloyl- bzw. Methacryloyl-Verbindungen bei der Polymerisation. Nachteilig bei dem in der Europäischen Patentanmeldung 374 660 beschriebenen Verfahren ist die Mitverwendung der genannten Acryloyl- bzw. Methacryloyl-Verbindungen, die zu einer geringen Raum/Zeit-Ausbeute bei der Copolymerisation führen. Darüberhinaus gestaltet sich das Verfahren durch die Handhabung zusätzlicher Monomerer technisch aufwendiger.

Aus der Europäischen Patentanmeldung 307 755 ist ebenfalls ein Verfahren zur Herstellung von Ethylen-/Vinylacetat-Copolymerisaten mit hohem Molekulargewicht und niedrigem Gelgehalt bekannt. Die nach diesem Verfahren hergestellten Ethylen-/Vinylacetat-Copolymerisate bzw. die daraus hergestellten Vulkanisate sind noch in ihren mechanischen Eigenschaften, wie Zugfestigkeit, Bruchdehnung, Spannungswert, Druckverformungsrest und Weiterreißwiderstand, verbesserungswürdig.

Es wurde nun ein Verfahren zur Herstellung von gelfreien Ethylen-Ninylacetat-Copolymerisaten mit einem hohen Gehalt an einpolymerisiertem Vinylacetat und einer hohen Mooney-Viskosität, das dadurch gekennzeichnet ist, daß man die Polymerisation in Lösung in Gegenwart von 20 bis 45 Gew.-% tert.-Butanol, bezogen auf die Reaktionslösung, bei Temperaturen von 50 bis 80°C und Drücken von 300 bis 450 bar unter Verwendung von Azoverbindungen in einer Rührkesselkaskade mit einer mittleren Verweilzeit der Reaktionslösung in der aus 2 bis 10 Reaktoren bestehenden Rührkesselkaskade von 5 bis 9 Stunden und einem Umsatz von 50 bis 70 Gew.-%, bezogen auf eingesetztes Vinylacetat, durchführt und wobei die Temperaturführung bei der Rührkesselkaskade so gewählt wird, daß in jedem Rührkessel der gleiche Anteil an eingesetzten Initiator zerfällt.

Die nach dem erfindungsgemäßen Verfahren hergestellten Ethylen-/Vinylacetat-Copolymerisate sind praktisch gelfrei. Ein praktisch gelfreies Produkt im Sinne der Erfindung enthält bei der 24-stündigen Extraktion mit Dichlormethan im Soxleth-Extraktor nicht mehr als 0,5, vorzugsweise nicht mehr als 0,2 Gew.-%, unlöslichen Rückstand, bezogen auf das Copolymerisat.

Der Gehalt an einpolymerisiertem Vinylacetat beträgt 30 bis 90, bevorzugt 40 bis 80 Gew.-%.

Die Mooney-Viskosität der nach dem erfindungsgemäßen Verfahren hergestellten Copolymerisate liegt bei 10 bis 80, bevorzugt 20 bis 60, besonders bevorzugt 20 bis 40 (bestimmt nach DIN 53523, ML 1+4 (100°C)).

Der Melt Flow Index (MFI) der nach dem erfindungsgemäßen Verfahren hergestellten Copolymerisate liegt bei 0,1 bis 3,0, bevorzugt 0,5 bis 2,0 g/10 min (bestimmt nach DIN 53735, MFI 190/2.16).

Die Kurzkettenverzweigung der nach dem erfindungsgemäßen Verfahren hergestellten Copolymerisate liegt bei 5 bis 50, bevorzugt 5 bis 25, besonders bevorzugt 5 bis 17 Methylgruppen pro 1.000 C₂-Einheiten der Polymerhauptkette (bestimmt mit ¹H-NMR).

Die erfindungsgemäße Polymerisation wird in Lösung in Gegenwart von bevorzugt 30 bis 40 Gew.-% tert.-Butanol, bezogen auf die Reaktionslösung, durchgeführt. Dabei setzt sich die Reaktionslösung zusammen aus eingesetztem Vinylacetat, eingesetztem Ethylen, eingesetztem tert.-Butanol und eingesetzter Azoverbindung.

Das erfindungsgemäße Verfahren wird bevorzugt bei Temperaturen von 55 bis 70°C und bei Drücken von 350 bis 400 bar durchgeführt.

Als Azoverbindungen, die als Initiator wirken, werden bevorzugt eingesetzt:
2,2'-Azobis(2,4-dimethylvaleronitril),
2,2'-Azobis(2,4-dimethyl-4-methoxyvaleronitril),
2,2'-Azobis(2,4,4-trimethylvaleronitril),
1,1'-Azobis(cyclooktancarbonitril),
1,1'-Azobis(cyclohexancarbonitril),
2,2'-Azobis(isobutyronitril) und/oder
2,2'-Azobis(isobuttersäuremethylester).

Besonders bevorzugt werden als Azoverbindungen eingesetzt:
2,2'-Azobis(2,4-dimethylvaleronitril),
2,2'-Azobis(2,4-dimethyl-4-methoxyvaleronitril) und/oder
2,2'-Azobis(isobutyronitril).

Ganz besonders bevorzugt wird als Azoverbindung eingesetzt:
2,2'-Azobis(2,4-dimethylvaleronitril).

Die Azoverbindungen werden im allgemeinen in Mengen von 0,005 bis 0,1, bevorzugt 0,01 bis 0,07 Gew.-%, bezogen auf die Reaktionslösung, eingesetzt.

Die erfindungsgemäß verwendete Rührkesselkaskade besteht aus 2 bis 10, bevorzugt 4 bis 6, Rührkesseln (Reaktoren). Die Temperaturführung bei der Rührkesselkaskade wird so gewählt, daß in jedem Rührkessel der gleiche Anteil an eingesetztem Initiator (Azoverbindung) zerfällt. Bei dem erfindungsgemäßen Verfahren ist die Verweilzeit der Reaktionslösung in der Rührkesselkaskade so zu wählen, daß in der aus dem letzten Rührkessel austretenden Reaktionslösung praktisch kein Initiator (Azoverbindung) mehr nachzuweisen ist, d.h. der Gehalt an Azoverbindung soll unter 5 Gew.-% der eingesetzten Azoverbindung liegen.

In einer bevorzugten Ausführungsform des erfindungsgemäßen Verfahrens (6 Rührkessel) werden in den ersten Rührkessel 35,5 Gew.-% tert.-Butanol, 35,2 Gew.-% Vinylacetat, 29,3 Gew.-% Ethylen und 0,03 Gew.-% 2,2'-Azobis(2,4-dimethylvaleronitril) unter Rühren eindosiert. Die Temperaturen in den Rührkesseln betragen dabei 62°C (erster Rührkessel), 58°C (zweiter Rührkessel), 63°C (dritter Rührkessel), 65°C (vierter Rührkessel), 67°C (fünfter Rührkessel) und 70°C (sechster Rührkessel). Der Druck bei allen Rührkesseln beträgt ca. 370 bar. Die mittlere Verweilzeit wird auf 8 Stunden eingestellt und der Umsatz, bezogen auf eingesetztes Vinylacetat, liegt bei ca. 60 %. Das erhaltene Ethylen-/Vinylacetat-Copolymerisat hat einen Vinylacetatgehalt von 60 Gew.-%, eine Mooney-Viskosität von 30 ME, einen MFI von 1,5. Seine Molekulargewichtsverteilung beträgt Mw/Mn = 3. Es hat eine Kurzkettenverzweigung von 14 CH₃-Gruppen pro 1.000 C₂-Einheiten.

Bei dem erfindungsgemäßen Verfahren ist es möglich, die Ethylenzugabe aufzuteilen. Vorteilhafterweise gibt man in den ersten Reaktor etwa 70 bis 90 % des einzusetzenden Ethylens und in einen oder mehrere der nachfolgenden Reaktoren den Rest des einzusetzenden Ethylens.

Das nach dem erfindungsgemäßen Verfahren erhaltene Ethylen-Vinylacetat-Copolymerisat kann in bekannter Weise, z.B. mit Hilfe von Peroxiden oder energiereicher Strahlung, vulkanisiert werden. Die erhaltenen Vulkanisate zeichnen sich gegenüber den bislang hergestellten Vulkanisaten aus durch eine besonders hohe Zugfestigkeit und Bruchdehnung, einen hohen Spannungswert und Weiterreißwiderstand und einen kleinen Druckverformungsrest.

Die erfindungsgemäß hergestellten Copolymerisate können in nicht vulkanisiertem oder in vulkanisiertem Zustand verwendet werden. Bevorzugte Beispiele für die Verwendung in nicht vulkanisiertem Zustand sind die Verwendung als Fließverbesserer für Schmiermittel und Hydrauliköle (wie z.B. Mitteldestillate nach DIN 7728 T1), als Klebstoffbindemittel, insbesondere für Schmelzkleber, und als (weichmachende) Mischungskomponente für Thermoplaste, Duroplaste und Kautschuke.

Die verwendeten Mengen hängen vom Einsatzzweck ab. So können Fließverbesserer die erfindungsgemäß hergestellten Copolymerisate enthalten in Mengen von 1 Gew.-% bis 10 Gew.-%.

Geeignete Thermoplaste und Duroplaste umfassen z.B. PVC, Polymethylmethacrylat, Styrol- und Acrylnitrilcopolymerisate einschließlich ABS, Polyvinylidenchlorid, Celluloseester, Polyester einschließlich Polycarbonate, Polyamide, Polyvinylacetate, Polyphenylensulfid, Polyethylen und thermoplastische Polyester wie Polyalkylenterephthalate; ungesättigte Polyesterharze, Phenol/Formaldehyd- und Amin/Formaldehyd-Kondensate.

Für die meisten Anwendungen setzt man die erfindungsgemäß hergestellten Copolymerisate in vulkanisierter Form ein. Die Vulkanisation kann - gegebenenfalls nach Zugabe von Füllstoffen, Stabilisatoren etc. - durch Vernetzung mit Peroxiden und mit mehrfunktionellen, vernetzend wirkenden Verbindungen wie z.B. Triallylcyanurat, Triallylisocyanurat, Bismaleinimiden oder Divinylbenzol, erfolgen.

Eine wichtige Verwendung von Vulkanisaten erfindungsgemäß hergestellter Copolymerisate ist der Einsatz als Mischungskomponente für andere Kautschuke, wie z.B. kautschukartige Homo- und Copolymerisate von Butadien, Isopren, Chloropren, Acrylnitril, Vinylacetat, Estern von Acryl- bzw. Methacrylsäure und C₁-C₈-Mono- bzw. Dialkoholen; Vinylchlorid, Ethylenpropylen. Für diese Zwecke können die erfindungsgemäß hergestellten Copolymerisate in Mengen innerhalb weiter Grenzen, z.B. von 1 bis 99, vorzugsweise von 10 bis 90, insbesondere von 10 bis 40 und 60 bis 90 Gew.-%, bezogen auf Mischung, verwendet werden.

Man kann die bereits vulkanisierten Copolymerisate zusetzen, wird aber meist die Copolymerisate in nichtvulkanisierter Form den nicht-vulkanisierten Kautschuken zusetzen und dann beide gemeinsam vulkanisierten.

Die letzte Ausführungsform läßt sich auch auf die Mischung der erfindungsgemäß hergestellten Copolymerisate mit Thermoplasten, wie z.B. mit Ethylen/Vinylacetat-Copolymerisaten mit VA-Gehalten von 1 bis weniger als 30 Gew.-% anwenden.

Die erfindungsgemäß hergestellten Copolymerisate können als solche oder in Form der oben beschriebenen Mischungen zur Herstellung von vulkanisiserten Formkörpern, Folien und Überzügen jeglicher Art verwendet werden, z.B. zur Herstellung von Kabelaußenmänteln, Kabelleitlagen, Isolierungen, Transportbändern, Kraftübertragungselementen, Schläuchen, Dichtungen, Bälgen, Fußbodenbelägen und Schwingungsdämpfen.

Die nachfolgenden Beispiele sollen das erfindungsgemäße Verfahren verdeutlichen.

### Beispiele

### A) Herstellung von Ethylen-/Vinylacetat-Copolymerisaten

In den Beispielen 1 bis 5 (Tabelle 1) sind die Reaktionsparameter und Rohpolymerdaten von Ethylen-/Vinylacetat-Copolymerisaten beschrieben, wie sie dem Stand der Technik entsprechen (Vergleichsbeispiele).

In den Beispielen 6 bis 12 (Tabelle 1) sind die Reaktionsparameter und Rohpolymerdaten von Ethylen-/Vinylacetat-Copolymerisaten gemäß dem erfindungsgemäßen Verfahren beschrieben.

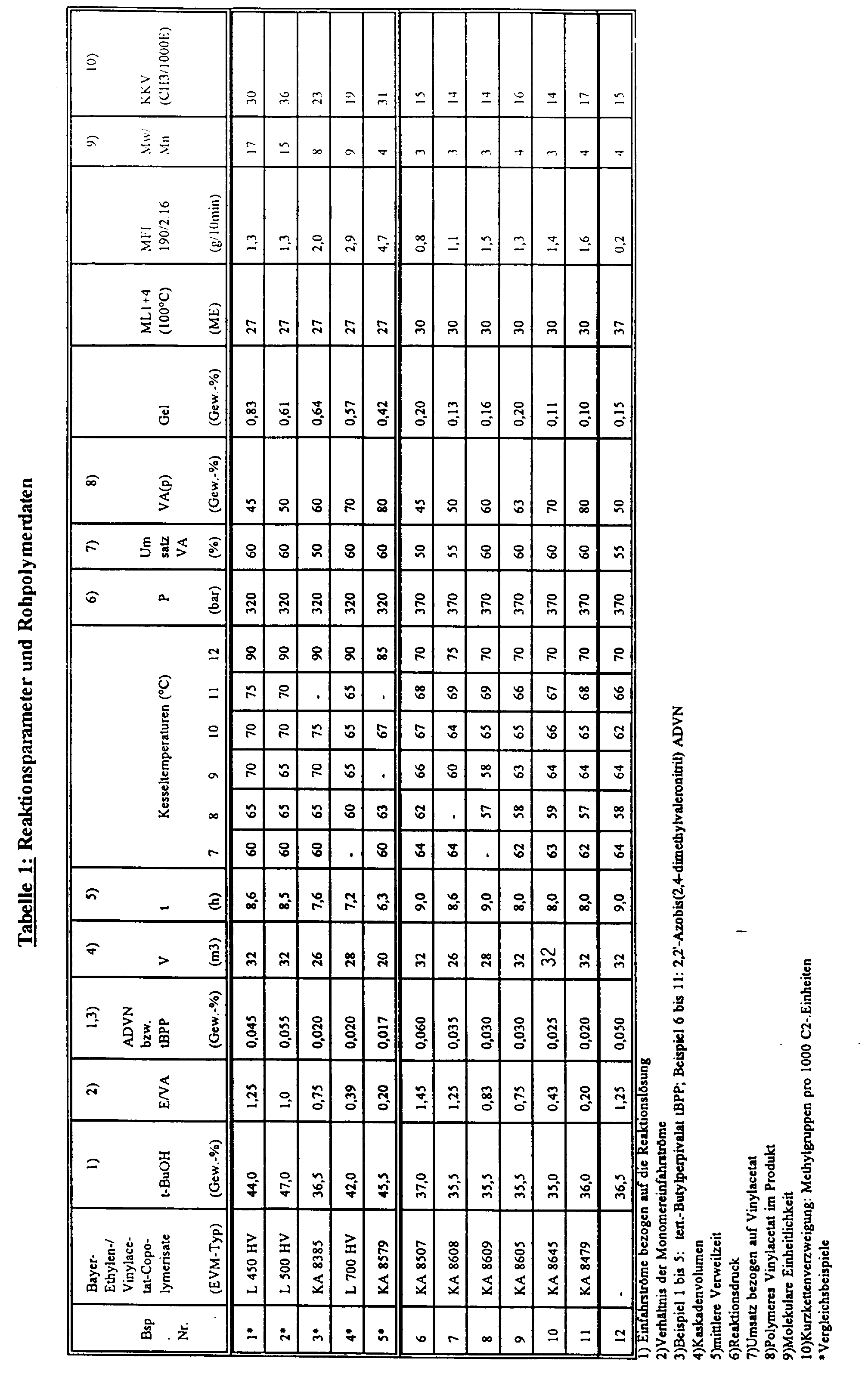

### B) Vulkanisation der Ethylen/Vinylacetat-Copolymerisate

Alle in den Beispielen beschriebenen Ethylen-/Vinylacetat-Copolymerisate wurden in einem Laborinnenmischer zusammen mit folgenden Bestandteilen gemischt:

| | |
|---|---|
| Levapren^{®} (Bayer) | 100 phr (Kautschuk) |
| Corax^{®} N 550 (Degussa) | 40 phr (Ruß) |
| Rhenovin^{®} DDA 70 (Rheinchemie) | 1,5 phr (Alterungsschutzmittel: Diphenylamin) |
| Stearinsäure | 1,0 phr (Verarbeitungshilfsmittel) |
| Rhenofit^{®} TAC/S (Rheinchemie) | 3,5 phr (Aktivator: Triallylcyanurat) |
| Perkadox^{®} 14/40 (Akzo) | 4,0 phr (Peroxid: Bis(tert.-butyl-peroxy-isopropyl)-benzol) |

Die Mischungen werden zu 2 mm starken Platten in der Presse (170°C/20 min) unter Druck (200 bar) vulkanisiert. Die erforderlichen Prüfkörper werden daraus ausgestanzt. Alle angewandten Testverfahren entsprechen dem einschlägigen Parametern nach ASTM.

In den Beispielen 1 bis 5 (Tabelle 2) sind die mechanischen Werte für EVM-Vulkanisate beschrieben, wie sie dem Stand der Technik entsprechen.

In den Beispielen 6 bis 12 (Tabelle 2) sind die mechanischen Werte für EVM-Vulkanisate beschrieben, wie sie gemäß dem erfindungsgemäßen Verfahren erhalten werden.

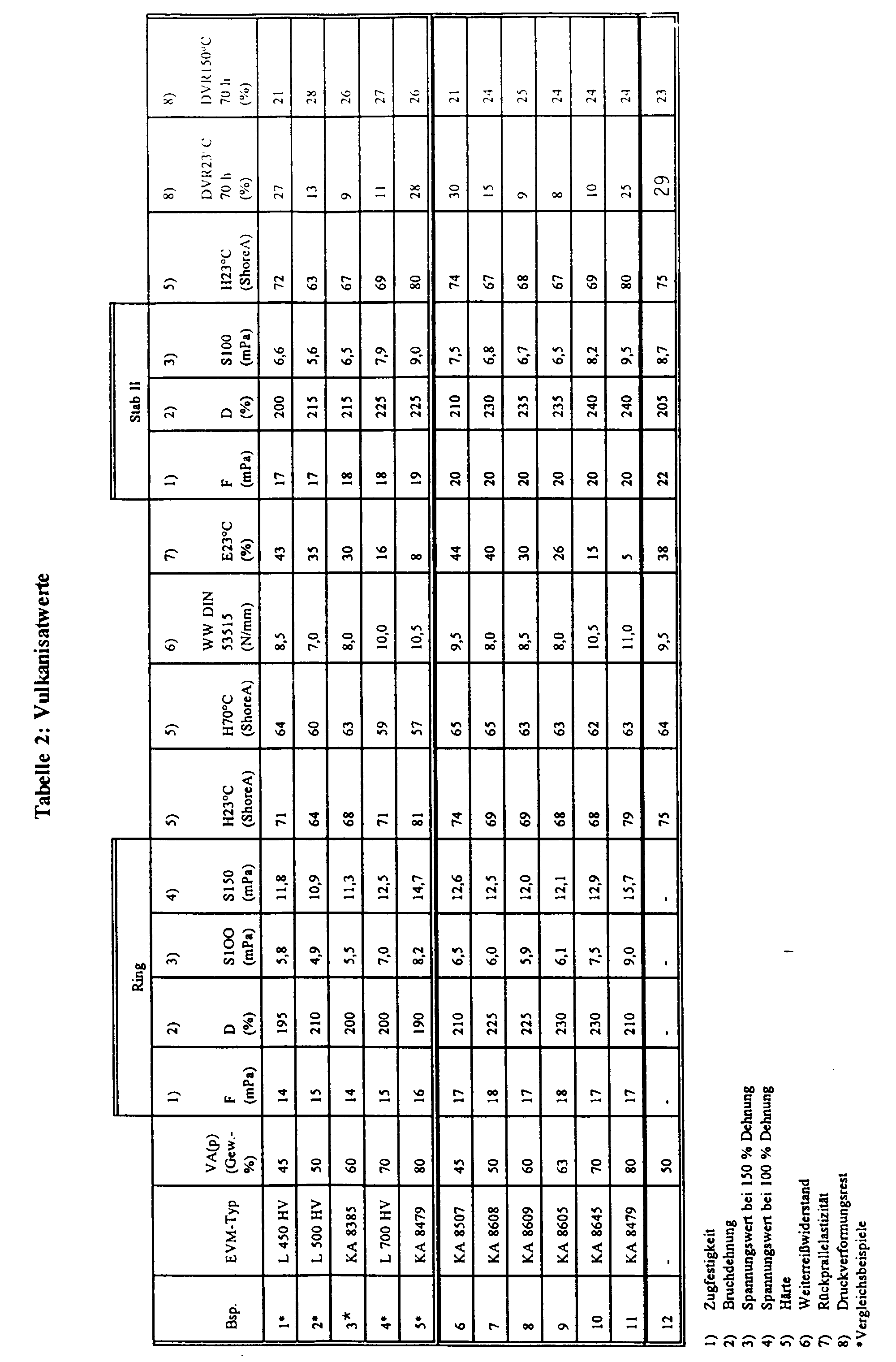

## Patentansprüche

1. Verfahren zur Herstellung von gelfreien Ethylen-Ninylacetat-Copolymerisaten mit einem hohen Gehalt an einpolymerisiertem Vinylacetat und einer hohen Mooney-Viskosität, dadurch gekennzeichnet, daß man die Polymerisation in Lösung in Gegenwart von 20 bis 45 Gew.-% tert.-Butanol, bezogen auf die Reaktionslösung, bei Temperaturen von 50 bis 80°C und Drücken von 300 bis 450 bar unter Verwendung von Azoverbindungen in einer Rührkesselkaskade mit einer mittleren Verweilzeit der Reaktionslösung in der aus 2 bis 10 Reaktoren bestehenden Rührkesselkaskade von 5 bis 9 Stunden und einem Umsatz von 50 bis 70 Gew.-%, bezogen auf eingesetztes Vinylacetat, durchführt und wobei die Temperaturführung bei der Rührkesselkaskade so gewählt wird, daß in jedem Rührkessel der gleiche Anteil an eingesetzten Initiator zerfällt.

2. Verwendung der nach Anspruch 1 hergestellten Ethylen-/Vinylacetat-Copolymerisate zur Herstellung von Vulkanisation.

## Claims

1. Process for the production of gel-free ethylene/vinyl acetate copolymers having an elevated content of copolymerised vinyl acetate and an elevated Mooney viscosity, characterised in that polymerisation is performed in solution in the presence of 20 to 45 wt.% of tert.-butanol, relative to the reaction solution, at temperatures of 50 to 80°C and pressures of 300 to 450 bar using azo compounds in a series of stirred-tank reactors with an average residence time of the reaction solution in the series of stirred-tank reactors, which consists of 2 to 10 reactors, of 5 to 9 hours and a conversion of 50 to 70 wt.%, relative to the introduced vinyl acetate, and wherein temperature control in the series of stirred-tank reactors is selected such that the same proportion of introduced initiator decomposes in each stirred-tank reactor.

2. Use of the ethylene/vinyl acetate copolymers produced according to claim 1 for the production of vulcanisates.

## Revendications

1. Procédé pour la préparation de copolymères d'éthylène/acétate de vinyle exempts de gel, possédant une teneur élevée en acétate de vinyle introduit par polymérisation et une viscosité de Mooney élevée, caractérisé en ce qu'on effectue la polymérisation en solution en présence de 20 à 45 pour cent en poids de tert.-butanol, rapportés à la solution réactionnelle, à des températures de 50 à 80°C et sous des pressions de 300 à 450 bar, en utilisant des composés azoïques dans des cuves d'agitation montées en cascade, avec un temps de séjour moyen de la solution réactionnelle dans la cascade de cuves d'agitation constituées par un nombre de 2 à 10 réacteurs de 5 à 9 heures et avec une conversion à concurrence de 50 à 70% en poids rapportés à l'acétate de vinyle mis en oeuvre, et dans lequel on sélectionne le contrôle de la température dans la cascade des cuves d'agitation de telle sorte que l'on obtienne, dans chaque cuve d'agitation, une décomposition de la même fraction de l'initiateur mis en oeuvre.

2. Utilisation de copolymères d'éthylène/acétate de vinyle préparés conformément à la revendication 1 pour la préparation de produits de vulcanisation.
